# EUROPEAN PATENT APPLICATION

(11) **EP 4 421 938 A1**
(43) Date of publication of application: **28.08.2024**
(21) Application number: 22885576.3
(22) Date of filing: 29.09.2022
(51) Int. Cl.: H01M 10/0569, H01M 10/0567, H01M 10/0525

(54) **ELECTROCHEMICAL DEVICE AND ELECTRONIC DEVICE**

(30) Priority: 25.10.2021 CN 202111243754
(71) Applicant: Dongguan Amperex Technology Limited, Dongguan City, Guangdong Province 523000 (CN)
(72) Inventor: CUI, Hui, Dongguan, Guangdong 523000 (CN); LIU, Jian, Dongguan, Guangdong 523000 (CN); TANG, Chao, Dongguan, Guangdong 523000 (CN)
(74) Representative: Icosa
(86) International application number: PCT/CN2022/122425
(87) International publication number: WO 2023/071691

(57) **Abstract**

This application provides an electrochemical device and an electronic device. The electrochemical device includes a positive electrode, a negative electrode, and an electrolytic solution. The electrolytic solution includes an organic solvent, a lithium salt, and an additive. The organic solvent includes an acetate compound and a carbonate compound. The carbonate compound includes ethylene carbonate and propylene carbonate. Based on a total mass of the electrolytic solution, a mass percent of the acetate compound is 4% to 50%, and a mass percent of the ethylene carbonate is 5% to 20%. This application optimizes the content and type of the solvent in the electrolytic solution, and utilizes an interface modification function of the additive to enhance the charging capacity of the electrochemical device and the electronic device and reduce the charging temperature increment.

## Description

This application claims priority to Chinese Patent Application No. 202111243754.6, filed with the Chinese Patent Office on October 25, 2021 and entitled "ELECTROCHEMICAL DEVICE AND ELECTRONIC DEVICE", which is incorporated herein by reference in its entirety.

### TECHNICAL FIELD

This application relates to the technical field of energy storage, and in particular, to an electrochemical device and an electronic device.

### BACKGROUND

Electrochemical devices, such as a lithium-ion battery, are widely used in the fields such as wearable devices, smartphones, unmanned aerial vehicles, and notebook computers by virtue of advantages such as a high working voltage, a high energy density, environmental friendliness, stable cycling, and safety. With the development of modem information technology and wider application of electrochemical devices, higher requirements have been posed on a charging capacity and a charging temperature increment of the electrochemical devices.

In view of this, in the technical field of energy storage, how to enhance the charging capacity and reduce the charging temperature increment of the electrochemical devices has become an urgent problem to be solved.

### SUMMARY

An objective of this application is to provide an electrochemical device and an electronic device to reduce a charging temperature increment.

According to a first aspect of this application, an electrochemical device is provided. The electrochemical device includes a positive electrode, a negative electrode, and an electrolytic solution. The electrolytic solution includes an organic solvent, a lithium salt, and an additive. The organic solvent includes an acetate compound and a carbonate compound. The carbonate compound includes ethylene carbonate (EC) and propylene carbonate (PC). Based on a total mass of the electrolytic solution, a mass percent A of the acetate compound is 4% to 50%, and a mass percent B of the ethylene carbonate is 5% to 20%. Through in-depth research, the applicant hereof finds that the organic solvent containing the foregoing content of acetate compound and carbonate compound can enhance the cycle performance of the electrochemical device and reduce the charging temperature increment.

In some embodiments of the first aspect of this application, the acetate compound includes at least one of methyl acetate, ethyl acetate, or propyl acetate.

In some embodiments of the first aspect of this application, the electrolytic solution further includes a polynitrile compound. The polynitrile compound includes at least two of succinonitrile, adiponitrile, 1,3,6-hexanetricarbonitrile, 1,2,3-tris(2-cyanoethoxy)propane, ethylene glycol bis(propionitrile) ether, or 1,4-dicyano-2-butene. By selecting the foregoing polynitrile compound, this application can further enhance the cycle performance of the electrochemical device and reduce the charging temperature increment.

In some embodiments of the first aspect of this application, a mass percent C of the polynitrile compound is 0.1% to 10%.

In some embodiments of the first aspect of this application, a mass percent C of the polynitrile compound and the mass percent A of the acetate compound satisfy a relationship: 0.1 ≤ C/A ≤ 0.8. By controlling the value of the C/A ratio within the foregoing range, this application can enhance the cycle performance of the electrochemical device.

In some embodiments of the first aspect of this application, the additive includes fluoroethylene carbonate (FEC). A mass percent D of the fluoroethylene carbonate and a mass percent E of the propylene carbonate satisfy a relationship: 0.2 ≤ D/E ≤ 1.

In some embodiments of the first aspect of this application, the mass percent E of the propylene carbonate is 5% to 30% or the mass percent D of the fluoroethylene carbonate is 0.1% to 15%. By controlling the mass percent of the fluoroethylene carbonate and the mass percent of the propylene carbonate within the foregoing ranges, this application can enhance the cycle performance of the electrochemical device.

In some embodiments of the first aspect of this application, the lithium salt is LiPF₆. Based on the total mass of the electrolytic solution, the mass percent of the lithium salt is 10% to 20%.

In some embodiments of the first aspect of this application, a compacted density of a negative active material in the negative electrode is 1.40 g/cm³ to 1.70 g/cm³. By controlling the compacted density of the negative active material within the foregoing range, this application can further enhance the cycle performance of the electrochemical device and reduce the charging temperature increment.

In some embodiments of the first aspect of this application, the negative electrode includes pore channels. Each pore channel satisfies at least one of the following conditions: (a) a pore diameter is 20 µm to 100 µm; (b) a pore depth ranges from 5 µm to 50 µm; and (c) a number of pores per unit area is 0.5/mm² to 100/mm². By controlling the pore diameter of the pore channels of the negative electrode, the pore depth, and the number of pores per unit area to fall within the foregoing ranges, this application can further enhance the cycle performance of the electrochemical device and reduce the charging temperature increment.

A second aspect of this application provides an electronic device. The electronic device includes the electrochemical device according to the first aspect of this application.

For the electrochemical device and the electronic device according to this application, by optimizing the content and type of the solvent in the electrolytic solution, this application can improve kinetic properties of the electrochemical device, enhance the charging capacity, and reduce the charging temperature increment. By adding an appropriate additive in the electrolytic solution, this application can further enhance the charging capacity and reduce the charging temperature increment.

Definitely, implementation of any one product or method according to this application does not necessarily achieve all of the foregoing advantages concurrently.

### DETAILED DESCRIPTION OF EMBODIMENTS

To make the objectives, technical solutions, and advantages of this application clearer, the following describes this application in more detail. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in the subject-matter hereof, this application is construed by using a lithium-ion battery as an example of an electrochemical device, but the electrochemical device according to this application is not limited to the lithium-ion battery. A person skilled in the art understands that the following description is merely illustrative without limiting the protection scope of this application.

The implementations of this application are described below in more detail with reference to embodiments and comparative embodiments. Various tests and evaluations are performed by the following methods. In addition, unless otherwise specified, "fraction" and "%" are a percent by mass.

According to a first aspect of this application, an electrochemical device is provided. The electrochemical device includes a positive electrode, a negative electrode, and an electrolytic solution. The electrolytic solution includes an organic solvent, a lithium salt, and an additive. The organic solvent includes an acetate compound and a carbonate compound. The carbonate compound includes ethylene carbonate and propylene carbonate. Based on a total mass of the electrolytic solution, a mass percent A of the acetate compound is 4% to 50%, for example, the mass percent A of the acetate compound may be 4%, 10%, 12%, 20%, 28%, 36%, 50%, or a value falling within a range formed by any two thereof; and a mass percent B of the ethylene carbonate is 5% to 20%, for example, the mass percent B of the ethylene carbonate may be 5%, 8%, 11%, 14%, 17%, 20%, or a value falling within a range formed by any two thereof.

Through research, the applicant hereof finds that, by adjusting the organic solvent to contain the acetate compound and the carbonate compound, and by controlling the content of the acetate compound and the ethylene carbonate to fall within the foregoing ranges, this application increases a dissociation rate of the lithium salt and enhances stability of a solid electrolyte interface (SEI) film during the cycling of the electrochemical device, and in turn, improves the kinetic performance of the electrochemical device, improves the cycle performance, and reduces the charging temperature increment.

In some embodiments of this application, the acetate compound includes at least one of methyl acetate, ethyl acetate, or propyl acetate. Without being limited to any theory, the applicant hereof finds that, because the foregoing acetate compounds are of low viscosity, the transmission of lithium ions is facilitated during the charging, the transfer impedance is reduced, and in turn, the charging temperature increment of the electrochemical device is reduced.

In some embodiments of this application, the electrolytic solution further includes a polynitrile compound. The polynitrile compound includes at least two of succinonitrile (SN), adiponitrile (ADN), 1,3,6-hexanetricarbonitrile (HTCN), 1,2,3-tris(2-cyanoethoxy)propane (TCEP), ethylene glycol bis(propionitrile)ether (DENE), or 1,4-dicyano-2-butene (HEDN). Without being limited to any theory, the applicant hereof finds that when at least two of the foregoing polynitrile compounds are selected in combination, this application improves the stability of the SEI film during the cycling of the electrochemical device, and in turn, enhances the cycle performance of the electrochemical device, and reduces the charging temperature increment.

In some embodiments of the first aspect of this application, a mass percent C of the polynitrile compound is 0.1% to 10%. For example, the mass percent C of the polynitrile compound may be 0.1%, 1%, 2%, 4%, 6%, 8%, 10%, or a value falling within a range formed by any two thereof.

In some embodiments of the first aspect of this application, the mass percent C of the polynitrile compound and the mass percent A of the acetate compound satisfy a relationship: 0.1 ≤ C/A ≤ 0.8. For example, the value of the C/A ratio may be 0.1, 0.2, 0.3, 0.4, 0.5, 0.6, 0.7, 0.8, or a value falling within a range formed by any two thereof. The applicant hereof finds that when the value of the C/A ratio is excessively low, for example, lower than 0.1, the cycle performance and the charging temperature increment of the electrochemical device are not improved significantly; when the value of the C/A ratio is excessively high, for example, higher than 0.8, the mass percent of the polynitrile compound will be excessive or the mass percent of the acetate compound will be deficient, the viscosity of the electrolytic solution will increase, the polarization will be intense during the cycling, thereby aggravating the charging temperature increment and cycle performance of the electrochemical device. By controlling the value of the C/A ratio within the foregoing range, this application further enhances the cycle performance of the electrochemical device and reduces the charging temperature increment.

In some embodiments of this application, the additive includes fluoroethylene carbonate (FEC). A mass percent of the fluoroethylene carbonate is D. The mass percent D of the fluoroethylene carbonate and the mass percent E of the propylene carbonate satisfy a relationship: 0.2 ≤ D/E ≤ 1. For example, the value of the D/E ratio may be 0.2, 0.3, 0.4, 0.5, 0.6, 0.7, 0.8, 0.9, 1, or a value falling within a range formed by any two thereof. Without being limited to any theory, the applicant hereof finds that when the ratio between the mass percent of the FEC and the mass percent of the propylene carbonate is excessively low, for example, when the D/E ratio is less than 0.2, due to the relatively high viscosity of the solvent, the internal resistance of the lithium-ion battery will increase, the charging temperature increment will increase, the protection for the negative electrode is insufficient, and the cycle performance is poor. When the ratio between the mass percent of the FEC and the mass percent of the propylene carbonate is excessively high, for example, when the D/E ratio is higher than 1, the dissociation of the lithium salt will be insufficient, the temperature increment will increase, the mass percent of the FEC is excessive, the high-temperature stability is poor, and the cycle performance is deteriorated. By controlling the ratio between the mass percent of the fluoroethylene carbonate and the mass percent of the propylene carbonate to fall within the foregoing range, this application enhances the cycle performance of the electrochemical device and reduces the charging temperature increment.

In some embodiments of this application, the mass percent E of the propylene carbonate is 5% to 30% or the mass percent D of the fluoroethylene carbonate is 0.1% to 15%. For example, E may be 5%, 10%, 12%, 14%, 16%, 18%, 20%, 30%, or a value falling within a range formed by any two thereof, and D may be 0.1%, 1%, 3%, 5%, 7%, 9%, 11%, 15%, or a value falling within a range formed by any two thereof.

In some embodiments of this application, the lithium salt is LiPF₆. Based on the total mass of the electrolytic solution, the mass percent of the lithium salt is 10% to 20%. For example, the mass percent of the lithium salt may be 10%, 12%, 14%, 16%, 18%, 20%, or a value falling within a range formed by any two thereof. Without being limited to any theory, the applicant hereof finds that, by controlling the mass percent of the lithium salt within the foregoing range, this application increases the conductivity during the cycling of the electrochemical device, and in turn, improves the cycle performance of the electrochemical device.

In this application, the electrolytic solution may further include another nonaqueous solvent. The other nonaqueous solvent is not particularly limited in this application, as long as the objectives of this application can be achieved. For example, the nonaqueous solvent may include, but without being limited to, at least one of a carboxylate compound, an ether compound, or another organic solvent. The carboxylate compound may include, but without being limited to, at least one of methyl formate, ethyl formate, methyl propionate, ethyl propionate, propyl propionate, γ-butyrolactone, decanolactone, valerolactone, or caprolactone. The ether compound may include, but without being limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but without being limited to, at least one of dimethyl sulfoxide, 1,2-dioxolane, methyl sulfolane, 1,3-dimethyl-2-imidazolidinone, N-methyl-2-pyrrolidone, dimethylformamide, trimethyl phosphate, triethyl phosphate, or trioctyl phosphate. Based on the total mass of the electrolytic solution, the total mass percent of the other nonaqueous solvent is 5% to 60%, for example, 5%, 10%, 15%, 20%, 25%, 30%, 35%, 40%, 45%, 50%, 55%, 60%, or a value falling within a range formed by any two thereof.

In this application, the electrolytic solution may further include other additives. The other additives are not particularly limited in this application, as long as the objectives of this application can be achieved. For example, the other additives may include, but without being limited to, lithium tetrafluoroborate (LiBF₄), ethylene sulfate (DTD), vinylene carbonate (VC), ethylene sulfite (PS), or lithium bis(oxalato)borate (LiBOB).

In some embodiments of this application, the electrochemical device includes a negative electrode. A compacted density of the negative active material in the negative electrode is 1.40 g/cm³ to 1.70 g/cm³. For example, the compacted density of the negative active material may be 1.40 g/cm³, 1.45 g/cm³, 1.50 g/cm³, 1.55 g/cm³, 1.60 g/cm³, 1.65 g/cm³, 1.70 g/cm³, or a value falling within a range formed by any two thereof. Without being limited to any theory, the applicant hereof finds that when the compacted density of the negative active material is excessively low, for example, lower than 1.40 g/cm³, the contact between negative electrode materials in the electrochemical device is poor, conduction of electrons and ions is obstructed, the charging temperature increment is large, and the cycle performance is low. When the compacted density of the negative active material is excessively high, for example, higher than 1.70 g/cm³, the negative electrode is prone to overvoltage, the charging capacity is poor, the charging temperature increment is large, the cycle performance is low, and the overvoltage is prone to cause breakage of the material particles. By controlling the compacted density of the negative active material within the foregoing range, this application can enhance the cycle performance of the electrochemical device and reduce the charging temperature increment.

In some embodiments of this application, the negative electrode material in the negative electrode includes at least one of a carbon material, silicon, a silicon-oxygen material, or a silicon-carbon material. The carbon material includes at least one of natural graphite, artificial graphite, mesocarbon microbead (MCMB), hard carbon, or soft carbon.

In some embodiments of this application, the negative electrode includes pore channels. Each pore channel satisfies at least one of the following conditions: (a) a pore diameter of the pore channel is 20 µm to 100 µm, for example, the pore diameter of the pore channel may be 20 µm, 30 µm, 40 µm, 50 µm, 60 µm, 70 µm, 80 µm, 90 µm, 100 µm, or a value falling within a range formed by any two thereof; (b) a pore depth ranges from 5 µm to 50 µm, for example, the pore depth may be 5 µm, 15 µm, 20 µm, 25 µm, 30 µm, 35 µm, 40 µm, 45 µm, 50 µm, or a value falling within a range formed by any two thereof; (c) the number of pores per unit area is 0.5/mm² to 100/mm², for example, the number of pores per unit area may be 0.5/mm², 1/mm², 10/mm², 20/mm², 30/mm², 40/mm², 50/mm², 60/mm², 70/mm², 80/mm², 90/mm², 100/mm², or a value falling within a range formed by any two thereof. Without being limited to any theory, the applicant hereof finds that, by controlling the intensity of an infrared laser beam, punching holes on the surface of the negative electrode plate, and controlling the pore diameter of the pore channel, the pore depth, and the number of pores per unit area to fall within the foregoing ranges, this application improves infiltration of the electrolytic solution between the materials, facilitates transmission of lithium ions, reduces the transfer impedance, and in turn, improves the cycle performance of the electrochemical device and reduces the charging temperature increment.

The positive electrode plate is not particularly limited in this application, as long as the objectives of this application can be achieved. The positive electrode plate typically includes a positive current collector and a positive active material. The positive current collector is not particularly limited, and may be any positive current collector well known in the art, such as a copper foil, an aluminum foil, an aluminum alloy foil, a composite current collector, or the like. The positive active material is not particularly limited, and may be any positive active material in the prior art. For example, the positive active material may include at least one of lithium nickel cobalt manganese oxide, lithium nickel cobalt aluminum oxide, lithium iron phosphate, lithium cobalt oxide, lithium manganese oxide, or lithium manganese iron phosphate.

The thicknesses of the positive current collector and the positive active material are not particularly limited in this application, as long as the objectives of this application can be achieved. For example, the thickness of the positive current collector is 8 µm to 12 µm, and the thickness of the positive active material is 30 µm to 120 µm.

In this application, the positive active material layer may further include a conductive agent. The conductive agent is not particularly limited in this application, as long as the objectives of this application can be achieved. For example, the conductive agent may include, but without being limited to, at least one of conductive carbon black (Super P), carbon nanotubes (CNTs), carbon fibers, flake graphite, Ketjen black, graphene, a metal material, or a conductive polymer. The carbon nanotubes may include, but without being limited to, single-walled carbon nanotubes and/or multi-walled carbon nanotubes. The carbon fibers may include, but without being limited to, vapor grown carbon fibers (VGCF) and/or carbon nanofibers. The metal material may include, but without being limited to, metal powder and/or metal fibers. Specifically, the metal may include, but without being limited to, at least one of copper, nickel, aluminum, or silver. The conductive polymer may include, but without being limited to, at least one of polyphenylene derivatives, polyaniline, polythiophene, polyacetylene, or polypyrrole.

In this application, the positive active material layer may further include a binder. The binder is not particularly limited in this application, as long as the objectives of this application can be achieved. For example, the binder may include, but without being limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic (acrylated) styrene-butadiene rubber, epoxy resin, nylon, or the like.

Optionally, the positive electrode may further include a conductive layer. The conductive layer is located between the positive current collector and the positive material layer. The components of the conductive layer are not particularly limited in this application, and may be a conductive layer commonly used in the art. For example, the conductive layer may include, but without being limited to, the foregoing conductive agent and binder.

The negative current collector is not particularly limited in this application, as long as the objectives of this application can be achieved. The negative current collector may be made of a material such as a metal foil or a porous metal sheet. For example, the negative current collector is a foil or porous sheet made of copper, nickel, titanium, iron, or another metal, or an alloy thereof, such as a copper foil. The negative active material layer includes a negative active material, a conductive agent, a binder, and a thickener. The binder may be at least one of styrene-butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be sodium carboxymethyl cellulose (CMC). The thickness of the negative current collector is not particularly limited in this application, as long as the objectives of this application can be achieved. For example, the thickness is 4 µm to 12 µm.

In this application, the negative material layer may further include a conductive agent. The conductive agent is not particularly limited in this application, as long as the objectives of this application can be achieved.

In this application, the negative material layer may further include a binder. The binder is not particularly limited in this application, as long as the objectives of this application can be achieved.

Optionally, the negative electrode may further include a conductive layer. The conductive layer is located between the negative current collector and the negative material layer. The components of the conductive layer are not particularly limited in this application, and may be a conductive layer commonly used in the art.

The separator is not particularly limited in this application, as long as the objectives of this application can be achieved. The separator may include a substrate layer and a surface treatment layer. The material of the substrate layer is not particularly limited in this application. For example, the material of the substrate layer may include, but without being limited to, at least one of polyethylene (PE)-based, polypropylene (PP)-based, or polytetrafluoroethylene-based polyolefin (PO), polyester (such as polyethylene terephthalate (PET)), cellulose, polyimide (PI), polyamide (PA), spandex fiber, or aramid fiber. The type of the substrate layer may include, but without being limited to, at least one of a woven film, a non-woven film, a microporous film, a composite film, separator paper, a calendered film, or a spinning film. The material of the substrate layer is preferably PP. The separator according to this application may be a porous structure. The pore size of the separator is not particularly limited, as long as the objectives of this application can be achieved. For example, the pore size may be 0.01 µm to 1 µm. The thickness of the separator is not particularly limited in this application, as long as the objectives of this application can be achieved. For example, the thickness may be 5 µm to 500 µm.

In this application, a surface treatment layer may be further disposed on at least one surface of the substrate layer. The surface treatment layer is not particularly limited in this application, and may be a polymer layer or an inorganic compound layer, or a layer compounded of a polymer and an inorganic compound. The inorganic compound layer may include, but without being limited to, inorganic particles and an inorganic compound layer binder. The inorganic particles are not particularly limited in this application, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic compound layer binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, or poly(vinylidene difluoride-co-hexafluoropropylene).

The electrochemical device in this application is not particularly limited, and may be any device in which an electrochemical reaction occurs. In some embodiments, the electrochemical device may include, but without being limited to, a lithium-ion battery.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolytic solution into the package, and sealing the package to obtain an electrochemical device; or, stacking the positive electrode, the separator, and the negative electrode in sequence, and then fixing the four corners of the entire stacked structure by use of adhesive tape to obtain a stacked-type electrode assembly, putting the electrode assembly into a package, injecting the electrolytic solution into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device.

A second aspect of this application provides an electronic device. The electronic device includes the electrochemical device according to any one embodiment of this application described above. The electrochemical device according to this application achieves good cycle performance and a relatively small charging temperature increment, and therefore, the electronic device according to this application achieves a relatively long service life and good performance.

The electronic device according to this application is not particularly limited, and may be any electronic device known in the prior art. For example, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Test methods and devices

### Lithium plating test

Charging the battery at a current of 3 C at 25 °C until the voltage reaches 4.45 V, charging the battery at a constant voltage of 4.45 V until the current reaches 0.05 C, and then discharging the battery at a constant current of 1.0 C until the voltage reaches 3.0 V, thereby completing one cycle. Repeating the foregoing steps for 10 cycles, and disassembling the battery to check the degree of lithium plating. If the lithium plating is not found or the area of lithium plating is less than 2%, it is hereby determined that the battery is free from lithium plating. If the area of lithium plating is 2% to 20%, it is determined that slight lithium plating occurs. If the area of lithium plating is greater than 20%, it is determined that severe lithium plating occurs.

### Temperature increment test

Charging the battery at a constant current of 0.5 C at a test temperature of 25 °C until the voltage reaches 4.45 V, and then charging the battery at a constant voltage until the current reaches 0.05 C, and leaving the battery to stand for 60 minutes. Subsequently, discharging the lithium-ion battery at a constant current of 0.5 C until the voltage reaches 3 V, and leaving the battery to stand for 60 minutes. Charging the lithium-ion battery at constant current of 6 C until the voltage reaches 4.45 V, and then charging the battery at a constant voltage until the current reaches 0.05 C. Monitoring a temperature of the battery during the high-current charging, and subtracting the test temperature of 25 °C from the temperature of the battery to obtain a temperature increment of the battery charged at 6 C.

### High-temperature cycling test

Putting the battery in a 45 °C thermostat, charging the battery at a constant current of 1.5 C until the voltage reaches 4.45 V, and then charging the battery at a constant voltage of 4.45 V until the current reaches 0.05 C. Subsequently, discharging the battery at a constant current of 1.0 C until the voltage reaches 3.0 V, thereby completing a charge-and-discharge cycle. Repeating the foregoing steps to complete 800 charge-and-discharge cycles, and monitoring the capacity retention rate. Cycle capacity retention rate of the battery cycled at 45 °C = (800^{th}-cycle discharge capacity/initial discharge capacity) × 100%.

### Measuring the mass percent of ingredients in the electrolytic solution

Discharging and then centrifuging a battery cell, performing a GC-MS test on the liquid obtained through the centrifugation, and measuring the mass percent of each ingredient (acetate, EC, PC, and additive).

### Measuring the compacted density of the negative active material

The compacted density of the negative active material is measured by the following method:

Taking a negative electrode plate coated with a negative active material on both sides, and cutting out 20 small discs from the negative electrode plate to form specimens, where the area of each disc is 1540.25 mm². Measuring the weight and thickness of the specimens. Calculating the compacted density of the negative active material according to the following formula: compacted density = (weight of a small disc - weight of the substrate)/(1540.25 × (thickness of the double-side-coated small disc - thickness of the substrate)) × 1000. Averaging out the measured values of the specimens to obtain the compacted density of the negative active material in each embodiment.

The weight and thickness of the substrate (copper foil) are obtained by measuring the weight and thickness of a region uncoated with the active material.

Weight of the small disc and weight of the substrate: (unit: mg)

Thickness of the double-side-coated small disc and thickness of the substrate: (unit: µm).

### Testing the characteristics of the pore channel on the negative electrode plate

Characteristic data of the pore channel on the negative electrode plate (pore diameter of the pore channel, pore depth, and number of pores per unit area) are measured by using a scanning tunneling microscope.

### Embodiment 1

(1) Preparing a negative electrode plate: Mixing artificial graphite as a negative active material, styrene-butadiene rubber (SBR), and sodium carboxymethyl cellulose (CMC) at a mass ratio of 97.4: 1.2: 1.4, adding deionized water as a solvent, blending the mixture into a slurry with a solid content of 70 wt%, and stirring until the slurry is uniform. Coating one surface of an 8-µm-thick copper foil with the slurry evenly, and drying the foil coated with slurry at 110 °C. Performing cold calendering to obtain a negative electrode plate coated with a 150-µm thick negative active material layer on a single side. Subsequently, repeating the foregoing coating step on the other surface of the negative electrode plate to obtain a negative electrode plate coated with the negative active material layer on both sides. Cutting the negative electrode plate into a size of 74 mm × 867 mm, welding tabs, and leaving the negative electrode plate ready for future use.
(2) Preparing a positive electrode plate: Mixing lithium cobalt oxide (LiCoO₂) as a positive active material, a conductive agent acetylene black, and a binder polyvinylidene difluoride (PVDF) at a mass ratio of 96: 2: 2, adding N-methylpyrrolidone (NMP) as a solvent, and stirring the mixture with a vacuum mixer until the system is uniform so as to obtain a positive slurry in which the solid content is 75 wt%. Coating one surface of a 12-µm thick positive current collector aluminum foil with the positive slurry evenly, and drying the aluminum foil coated with positive slurry at 85 °C. Performing cold calendering to obtain a positive electrode plate coated with a 100-µm thick positive active material layer. Subsequently, repeating the foregoing steps on the other surface of the positive electrode plate to obtain a positive electrode plate coated with the positive active material layer on both sides. Cutting the positive electrode plate into a size of 74 mm × 867 mm, welding tabs, and leaving the positive electrode plate ready for future use.
(3) Preparing an electrolytic solution: Mixing ethylene carbonate (EC), propylene carbonate (PC), ethyl acetate (EA), ethyl propionate (EP) until uniform to obtain a nonaqueous solvent in an argon atmosphere glovebox in which the water content is less than 10 ppm, and then dissolving a well dried lithium salt LiPF₆ in the foregoing nonaqueous solvent, and adding an additive fluoroethylene carbonate to finally make a base electrolytic solution. The mass percent of the lithium salt is 10%, and the mass percent of the EC, PC, EA, and FEC is 10%, 15%, 4%, and 7.5%, respectively. The rest of the electrolytic solution is ethyl propionate, in which the mass ratio between the fluoroethylene carbonate and the ethylene carbonate is 0.5.
(4) Separator: Using a PE porous polymer film as a separator.
(5) Preparing a lithium-ion battery: Stacking the positive electrode plate, the separator, and the negative electrode plate in sequence, letting the separator be located between the positive electrode plate and the negative electrode plate to serve a separation function, winding the stacked structure to obtain a bare cell, placing the bare cell into an outer package foil, injecting the prepared electrolytic solution into the cell that is dried, and performing steps such as vacuum packaging, standing, chemical formation, and shaping to complete preparing the lithium-ion battery.

In Embodiment 2 to Embodiment 21, the steps of preparing a negative electrode plate, preparing a positive electrode plate, preparing an electrolytic solution, preparing a separator, and preparing a lithium-ion battery are the same as the counterpart described in Embodiment 1, and the changes in the relevant preparation parameters and performance indicators are shown in Table 1.

Embodiments 22 to 43 and Embodiment 46 are identical to Embodiment 3 except that: (i) a polynitrile compound is added on the basis of the electrolytic solution of Embodiment 3; and (ii) the type and mass percent of the polynitrile compounds, the total mass percent of the polynitrile compounds, and the ratio between the mass percent of the polynitrile compound and the mass percent of the acetate compound are adjusted according to Table 2.

Embodiment 44 is identical to Embodiment 2 except that: (i) a polynitrile compound is added on the basis of the electrolytic solution of Embodiment 2; and (ii) the type and mass percent of the polynitrile compounds, the total mass percent of the polynitrile compounds, and the ratio between the mass percent of the polynitrile compound and the mass percent of the acetate compound are adjusted according to Table 2.

Embodiment 45 is identical to Embodiment 10 except that: (i) a polynitrile compound is added on the basis of the electrolytic solution of Embodiment 10; and (ii) the type and mass percent of the polynitrile compounds, the total mass percent of the polynitrile compounds, and the ratio between the mass percent of the polynitrile compound and the mass percent of the acetate compound are adjusted according to Table 2.

Embodiments 47 to 55 are identical to Embodiments 23 to 31 except that the compacted density of the negative active material, the pore diameter of the pore channel, the pore depth of the pore channel, and the number of pores per unit area on the negative electrode plate are adjusted according to Table 3 on the basis of the electrolytic solution of Embodiments 23 to 31.

In Comparative Embodiments 1 to 7, the steps of preparing a negative electrode plate, preparing a positive electrode plate, preparing an electrolytic solution, preparing a separator, and preparing a lithium-ion battery are the same as the counterpart described in Embodiment 1, and the changes in the relevant preparation parameters and performance indicators are shown in Table 1.

Table 1 to Table 3 show the preparation parameters and performance test results of the embodiments and comparative embodiments.

**Table 1**

| Parameters in this application | | | | | | Battery performance indicators | | |
|---|---|---|---|---|---|---|---|---|
| Embodiment | Type and mass percent of acetate compound | Mass percent of EC | Mass percent of PC | Mass percent of FEC | D/E | Lithium plating | Temperature increment (°C) | 45 °C cycle capacity retention rate |
| 1 | Ethyl acetate (4%) | 10% | 15% | 7.5% | 0.5 | Slight lithium plating | 31.0 | 60.4% |
| 2 | Ethyl acetate (8%) | 10% | 15% | 7.5% | 0.5 | Slight lithium plating | 30.1 | 60.5% |
| 3 | Ethyl acetate (16%) | 10% | 15% | 7.5% | 0.5 | No lithium plating | 28.2 | 60.4% |
| 4 | Ethyl acetate (20%) | 10% | 15% | 7.5% | 0.5 | No lithium plating | 27.5 | 58.8% |
| 5 | Ethyl acetate (24%) | 10% | 15% | 7.5% | 0.5 | No lithium plating | 26.7 | 57.1% |
| 6 | Ethyl acetate (28%) | 10% | 15% | 7.5% | 0.5 | No lithium plating | 25.9 | 55.4% |
| 7 | Ethyl acetate (32%) | 10% | 15% | 7.5% | 0.5 | No lithium plating | 25.1 | 53.7% |
| 8 | Ethyl acetate (36%) | 10% | 15% | 7.5% | 0.5 | No lithium plating | 24.3 | 52.0% |
| 9 | Ethyl acetate (40%) | 10% | 15% | 7.5% | 0.5 | No lithium plating | 23.5 | 50.3% |
| 10 | Ethyl acetate (48%) | 10% | 15% | 7.5% | 0.5 | No lithium plating | 23.3 | 50.1% |
| 11 | Ethyl acetate (16%) | 5% | 15% | 7.5% | 0.5 | Slight lithium plating | 27.9 | 58.7% |
| 12 | Ethyl acetate (16%) | 15% | 15% | 7.5% | 0.5 | Slight lithium plating | 28.5 | 60.3% |
| 13 | Ethyl acetate (16%) | 20% | 15% | 7.5% | 0.5 | Slight lithium plating | 28.4 | 57.2% |
| 14 | Ethyl acetate (16%) | 10% | 15% | 3% | 0.2 | No lithium plating | 27.8 | 51.3% |
| 15 | Ethyl acetate (16%) | 10% | 15% | 12% | 0.8 | Slight lithium plating | 27.3 | 56.3% |
| 16 | Methyl acetate (8%) | 12% | 15% | 7.5% | 0.5 | No lithium plating | 25.1 | 60.2% |
| 17 | Methyl acetate (16%) | 12% | 15% | 9% | 0.6 | No lithium plating | 24.3 | 59.7% |
| 18 | Propyl acetate (8%) | 12% | 15% | 7.50% | 0.5 | Slight lithium plating | 30 | 60.80% |
| 19 | Propyl acetate (48%) | 12% | 15% | 9% | 0.6 | No lithium plating | 24.7 | 57.10% |
| 20 | Ethyl acetate (16%) | 10% | 10% | 5% | 0.5 | No lithium plating | 27.9 | 60.6% |
| 21 | Ethyl acetate (16%) | 10% | 20% | 10% | 0.5 | No lithium plating | 28.4 | 60.7% |
| Comparative Embodiment 1 | / | 5% | 15% | 2.3% | 0.15 | Severe lithium plating | 40.5 | 33.8% |
| Comparative | Ethyl acetate (2%) | 5% | 15% | 2.3% | 0.15 | Severe lithium plating | 37.7 | 32.7% |

| Embodiment 2 | | | | | | | | |
|---|---|---|---|---|---|---|---|---|
| Comparative Embodiment 3 | Ethyl acetate (52%) | 5% | 15% | 2.3% | 0.15 | No lithium plating | 23.1 | Cycling disabled, gassing, plunge of cycle capacity |
| Comparative Embodiment 4 | Ethyl acetate (12%) | 3% | 15% | 2.3% | 0.15 | Severe lithium plating | 38.5 | 21.2% |
| Comparative Embodiment 5 | Ethyl acetate (15%) | 25% | 15% | 2.3% | 0.15 | Severe lithium plating | 37.4 | 25.9% |
| Comparative Embodiment 6 | Ethyl acetate (16%) | 10% | 15% | 1.5% | 0.1 | No lithium plating | 27.7 | 41% |
| Comparative Embodiment 7 | Ethyl acetate (16%) | 10% | 15% | 15% | 1 | Severe lithium plating | 28.9 | 41% |

| | | | | | | | | |
|---|---|---|---|---|---|---|---|---|
| Note: "/" in Table 1 indicates that the corresponding preparation parameter does not exist. | | | | | | | | |

**Table 2**

| Parameters in this application | | | Battery performance indicators | | |
|---|---|---|---|---|---|
| Embodiment | Type and mass percent of polynitrile compound | C/A | Lithium plating | Temperature increment (°C) | 45 °C cycle capacity retention rate |
| 22 | ADN (3%)+SN (2%) | 0.3125 | No lithium plating | 28.3 | 69.3% |
| 23 | ADN (3%)+HTCN (2%) | 0.3125 | No lithium plating | 28.4 | 70.2% |
| 24 | ADN (3%)+TCEP (2%) | 0.3125 | No lithium plating | 28.3 | 69.5% |
| 25 | ADN (3%)+DENE (2%) | 0.3125 | No lithium plating | 28.4 | 69.7% |
| 26 | ADN (3%)+HEDN (0.5%) | 0.21875 | No lithium plating | 28.2 | 66.7% |
| 27 | SN (3%)+HTCN (2%) | 0.3125 | No lithium plating | 28.2 | 67.4% |
| 28 | HTCN (3%)+DENE (2%) | 0.3125 | Slight lithium plating | 28.5 | 68.5% |
| 29 | HTCN (3%)+TCEP (2%) | 0.3125 | Slight lithium plating | 28.3 | 68.7% |
| 30 | HTCN (3%)+HEDE (1%) | 0.25 | No lithium plating | 28.4 | 68.3% |
| 31 | DENE (2%)+TCEP (3%) | 0.3125 | Slight lithium plating | 28.3 | 68.4% |
| 32 | DENE (2%)+HEDN (2%) | 0.25 | No lithium plating | 28.2 | 68.1% |
| 33 | ADN (3%)+HTCN (2%)+DENE (1%) | 0.375 | Slight lithium plating | 28.5 | 73.1% |
| 34 | ADN (3%)+HTCN (2%)+TCEP (1%) | 0.375 | Slight lithium plating | 28.4 | 73.4% |
| 35 | ADN (3%)+HTCN (2%)+HEDN (0.5%) | 0.34375 | Slight lithium plating | 28.4 | 73.1% |
| 36 | SN (3%)+HTCN (2%)+DENE (1%) | 0.375 | Slight lithium plating | 28.3 | 73.6% |
| 37 | HTCN (3%)+DENE (1%)+TCEP (2%) | 0.375 | Slight lithium plating | 28.5 | 73.9% |
| 38 | HTCN (3%)+DENE (1%)+HEDN (0.5%) | 0.28125 | Slight lithium plating | 28.6 | 73.0% |
| 39 | DENE (2%)+TCEP (2%)+HEDN (0.5%) | 0.34375 | Slight lithium plating | 28.4 | 72.9% |
| 40 | ADN (3%)+HTCN (2%)+DENE (1%)+HEDN (0.5%) | 0.40625 | Slight lithium plating | 28.6 | 74.9% |
| 41 | ADN (3%)+HTCN (2%)+DENE (0.5%)+TCEP (1%) | 0.40625 | Slight lithium plating | 28.5 | 74.7% |
| 42 | ADN (3%)+HTCN (2%)+DENE (0.5%)+HEDN (1%)+TCEP (0.5%) | 0.4375 | Slight lithium plating | 28.7 | 74.1% |
| 43 | ADN (3%)+SN (2%)+HTCN (3%) | 0.5 | Slight lithium plating | 28.1 | 71.4% |
| 44 | ADN (3%)+SN (2%)+HTCN (3%) | 1 | Slight lithium plating | 29.7 | 71.8% |
| 45 | ADN (3%)+SN (2%)+HTCN (2%) | 0.15 | No lithium plating | 23.9 | 69.3% |
| 46 | ADN (2%) | 0.125 | No lithium plating | 28.9 | 60.5% |

**Table 3**

| Parameters in this application | | | | | | Battery performance indicators | | |
|---|---|---|---|---|---|---|---|---|
| Embodiment | Parameters of electrolytic solution | Compacted density of negative active material (g/cm³) | Pore diameter (µm) | Pore depth (µm) | Number of pores per unit area (number/mm²) | Lithium plating | Temperature increment (°C) | 45 °C cycle capacity retention rate |
| 47 | Same as Embodiment 23 | 1.5 | 20 | 25 | 50 | Slight lithium plating | 25.2 | 72.3% |
| 48 | Same as Embodiment 24 | 1.5 | 60 | 25 | 50 | No lithium plating | 24.6 | 70.1% |
| 49 | Same as Embodiment 25 | 1.5 | 100 | 25 | 50 | No lithium plating | 23.5 | 68.3% |
| 50 | Same as Embodiment 26 | 1.5 | 60 | 5 | 50 | Slight lithium plating | 25 | 72.0% |
| 51 | Same as Embodiment 27 | 1.5 | 60 | 50 | 50 | No lithium plating | 23.1 | 67.1% |
| 52 | Same as Embodiment 28 | 1.5 | 60 | 25 | 0.5 | Slight lithium plating | 25.2 | 71.9% |
| 53 | Same as Embodiment 29 | 1.5 | 60 | 25 | 100 | No lithium plating | 23.4 | 66.5% |
| 54 | Same as Embodiment 30 | 1.4 | 20 | 25 | 50 | No lithium plating | 25 | 70.1% |
| 55 | Same as Embodiment 31 | 1.7 | 20 | 25 | 50 | Slight lithium plating | 25.5 | 72.4% |

As can be seen from Embodiments 1 to 10 versus Comparative Embodiments 1 to 3, with the increase of the mass percent of the ethyl acetate, both the lithium plating and the charging temperature increment are alleviated, but the cycle performance declines to some extent when the mass percent of the ethyl acetate is relatively high. When the acetate compound is not contained, the lithium plating and the cycle performance are aggravated, and the charging temperature increment increases significantly. When the mass percent of the acetate compound is excessively low, the lithium plating is severe, the cycle performance deteriorates, and the charging temperature increment increases. When the mass percent of the acetate compound is excessively high, the cycling is disabled, gassing occurs, and the cycle capacity plunges.

As can be seen from Embodiment 3 and Embodiments 11 to 13 versus Comparative Embodiments 4 and 5, when the mass percent of the EC is relatively low, due to the dissociation of the lithium salt, the interface stability is enhanced, and the kinetic performance is improved, and therefore, the cycle performance is enhanced. When the mass percent of the EC is excessively high, the viscosity increases and the stability deteriorates. However, when the mass percent of the EC is excessively low, the cycle performance is poor and the lithium plating is severe. When the mass percent of the EC is excessively high, the cycle performance is poor and the lithium plating is severe.

As can be seen from Embodiments 3, 14, and 21 versus Comparative Embodiments 6 and 7, when the mass ratio between the FEC and the PC falls within the range specified herein, both the lithium plating and the charging temperature increment are alleviated to some extent. When the mass ratio between the FEC and the PC is excessively low, the cycle performance declines. When the mass ratio between the FEC and the PC is excessively high, the lithium plating is severe.

As can be seen from Embodiments 2, 3, 10, and Embodiments 22 to 46, when the polynitrile compound is added, the stability of the SEI film is further enhanced during the cycling, thereby enhancing the cycle performance.

As can be seen from Embodiment 40 and Embodiments 47 to 49, with the increase of the pore diameter of the pore channels on the negative electrode plate, both the lithium plating and the charging temperature increment are alleviated.

As can be seen from Embodiments 48, 50, and 51, when the pore depth of the pore channels on the negative electrode plate falls within the range specified herein, the resulting lithium-ion battery incurs slight or no lithium plating, the charging temperature increment is relatively low, and the cycle capacity retention rate is relatively high, indicating that the lithium-ion battery has achieved good cycle performance and alleviated the problem of the charging temperature increment, and is not prone to lithium plating during the cycling.

As can be seen from Embodiments 48, 52, and 53, when the number of pores per unit area on the negative electrode plate falls within the range specified herein, the resulting lithium-ion battery incurs slight or no lithium plating, the charging temperature increment is relatively low, and the cycle capacity retention rate is relatively high, indicating that the lithium-ion battery has achieved good cycle performance and alleviated the problem of the charging temperature increment, and is not prone to lithium plating during the cycling.

As can be seen from Embodiments 47, 54, and 55, when the compacted density of the negative active material in the negative electrode plate falls within the range specified herein, the resulting lithium-ion battery incurs slight or no lithium plating, the charging temperature increment is relatively low, and the cycle capacity retention rate is relatively high, indicating that the lithium-ion battery has achieved good cycle performance and alleviated the problem of the charging temperature increment, and is not prone to lithium plating during the cycling.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode, a negative electrode, and an electrolytic solution, wherein the electrolytic solution comprises an organic solvent, a lithium salt, and an additive; the organic solvent comprises an acetate compound and a carbonate compound, and the carbonate compound comprises ethylene carbonate and propylene carbonate; and, based on a total mass of the electrolytic solution, a mass percent A of the acetate compound is 4% to 50%, and a mass percent B of the ethylene carbonate is 5% to 20%.

2. The electrochemical device according to claim 1, wherein the acetate compound comprises at least one of methyl acetate, ethyl acetate, or propyl acetate.

3. The electrochemical device according to claim 1, wherein the electrolytic solution further comprises a polynitrile compound, and the polynitrile compound comprises at least two of succinonitrile, adiponitrile, 1,3,6-hexanetricarbonitrile, 1,2,3-tris(2-cyanoethoxy)propane, ethylene glycol bis(propionitrile)ether, or 1,4-dicyano-2-butene.

4. The electrochemical device according to claim 3, wherein a mass percent C of the polynitrile compound is 0.1% to 10%.

5. The electrochemical device according to claim 3, wherein a mass percent C of the polynitrile compound and the mass percent A of the acetate compound satisfy a relationship: 0.1 ≤ C/A ≤ 0.8.

6. The electrochemical device according to claim 1, wherein the additive comprises fluoroethylene carbonate, and a mass percent D of the fluoroethylene carbonate and a mass percent E of the propylene carbonate satisfy a relationship: 0.2 ≤ D/E ≤ 1.

7. The electrochemical device according to claim 6, wherein the mass percent E of the propylene carbonate is 5% to 30% or the mass percent D of the fluoroethylene carbonate is 0.1% to 15%.

8. The electrochemical device according to claim 1, wherein a compacted density of a negative active material in the negative electrode is 1.40 g/cm³ to 1.70 g/cm³.

9. The electrochemical device according to claim 1, wherein the negative electrode comprises pore channels, and each pore channel satisfies at least one of the following conditions: (a) a pore diameter is 20 µm to 100 µm; (b) a pore depth ranges from 5 µm to 50 µm; and (c) a number of pores per unit area is 0.5/mm² to 100/mm².

10. An electronic device, wherein the electronic device comprises the electrochemical device according to any one of claims 1 to 9.
